# EUROPEAN PATENT APPLICATION

(11) **EP 2 750 092 A1**
(43) Date of publication of application: **02.07.2014**
(21) Application number: 12306683.9
(22) Date of filing: 27.12.2012
(51) Int. Cl.: G06Q 20/32, G06F 21/32, G06F 21/35

(54) **Method for controlling a contactless transaction**

(71) Applicant: Gemalto SA, 92190 Meudon (FR)
(72) Inventor: Thill, Michel, 92190 Meudon (FR); Muller, Marc, 92190 Meudon (FR)
(74) Representative: Afdili, Ilham

(57) **Abstract**

Method for controlling contactless transactions, said contactless transactions being operated with a portable device, said portable device comprising a secure element, characterised in that it comprises storing a predetermined number of authorised transactions requesting a user's validation when a predetermined transaction's threshold is reached so that to regenerate a new number of authorised transactions.

## Description

### FIELD OF THE INVENTION

The present invention relates generally to contactless transactions and more specifically to a method for controlling contactless transaction.

### BACKGROUND OF THE INVENTION

Contactless applications like payment and transport are being deployed and a user can use his handset for performing associated transactions.

In the NFC (near field communication) technology, these applications for example do not require user control. The user has just to tap the corresponding reader with his handset and the transaction is validated.

Nevertheless, there is no control from the user on the transaction. If the handset is for example stolen, a thief is able to use these applications, and to perform the transactions as if he were the user himself.

There is a then a need for a method for controlling such transactions.

It is then an object of the invention to provide a method for controlling contactless transactions.

Thereto, the present invention provides a method for controlling contactless transactions, said contactless transactions being operated with a portable device, said portable device comprising a secure element, characterised in that it comprises storing a predetermined number of authorised transactions, requesting a user's validation when a predetermined transaction's threshold is reached so that to regenerate a new number of authorised transactions.

According to other aspects of the invention, the method may comprise capturing and storing a biometric data of the user in the secure element.

According to other aspects of the invention, the method may comprise using a voice data of the user as biometric data.

According to other aspects of the invention, the method may comprise using a SIM card as secure element.

According to other aspects of the invention, the method may comprise using a micro SD card as secure element.

Thanks to the invention, it is advantageously possible to limit the use of contactless transactions when the handset is stolen.

The invention provides advantageously a secure direct link with the user.

This invention allows to validate a predetermined number of authorized contactless transactions. A live validation of transactions validations just before their use are not considered as contactless transactions are mainly used as they are fast, and ready for use. It allows to always have one or more authorised transaction(s) ready for use in the case the user has decided it.

The various aspects, features and advantages of the invention will become more fully apparent to those having ordinary skill in the art upon careful consideration of the following Detailed Description, given by way of example thereof, with the accompanying drawings described below:

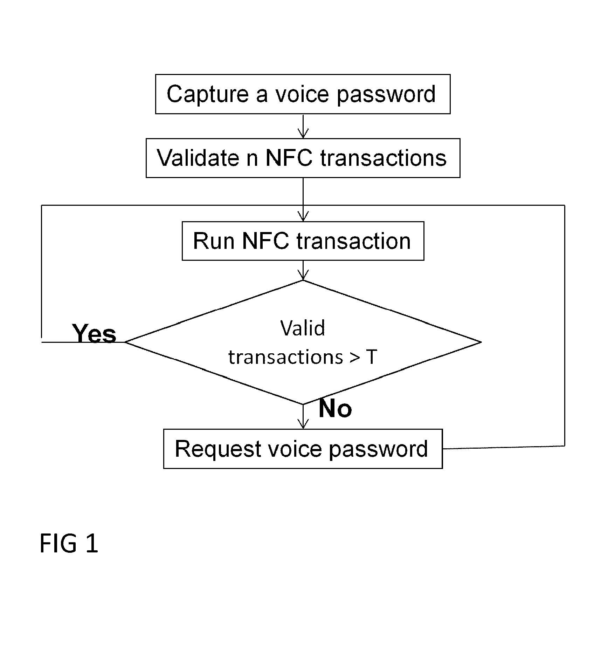

**FIGURE.1** schematically shows a diagram of an embodiment of the method of the present invention

### DETAILED DESCRIPTION

The present invention may be understood according to the detailed description provided herein.

Shown in figure 1 is a diagram of a method for a controlling contactless transactions, such as for example NFC transactions. Non represented are a mobile device which comprises a secure element. The mobile device is for example a handset. It will be well understood that it is not a limited example and any suitable device such as a tablet, or other mobile device adapted to receive or embed a secure element can be used.

In a first embodiment the secure element is a SIM card.

The secure element comprises a microphone, and comprises a predetermined threshold of contactless transactions. The microphone is advantageously embedded in the secure element for an easier control and an easier link with the secure element.

The method comprises an initializing phase which comprises a step of capturing and storing a biometric data of the user in the secure element. A voice data of the user is captured for example via the microphone and stored in the secure element. The voice data such as a sentence is used as a vocal key to enable NFC applications.

In this embodiment the biometric data is a voice data. It will be well understood that another biometric data could be used, and then in that case instead of a microphone, an adapted sensor in order to capture the corresponding biometric data is used accordingly.

In order to avoid to lose time just before the contactless transactions, the secure element requests to the user some tokens to authorize a predetermined NFC transactions. The method comprises then a step of storing a predetermined number of transactions "n" in the secure element This predetermined number of transactions represents the number of limited allowed contactless transactions, i.e. the maximum of allowed valid contactless transactions the user can do. The user is then at least allowed to run as many transactions as the predetermined number "n" of authorised transactions.

The request is validated by the vocal key pronounced by the user.

The method also comprises a step of storing a predetermined threshold "T" of contactless transactions.

The secure element comprises a means for counting the validated transactions made by the user, and means for comparing the validated contactless transactions with the predetermined stored threshold "T".

When the number of valid tokens become low, i.e. the number of transactions made by the user reaches the threshold "T", the secure element requests some new tokens. As represented in figure 1, T is equal to 2. The method comprises requesting a user's validation when a predetermined transaction's threshold "T" is reached so that to regenerate a new limited number of valid contactless transactions.

If the user wants to, the request is validated by the vocal key pronounced by the user.

After validation by the user, checking of the voice data by the secure element, the user is able to make new NFC transactions, i.e. while the valid transactions number is superior to the threshold, the user can make contactless transactions.

According to another embodiment of the invention, the secure element is a micro SD card as known in the art.

According to another embodiment of the invention, the number of limited contactless transactions can be modified by the user at each validation's request.

Thanks to the invention, the NFC transactions are controlled by voice. There is advantageously a limited number of transactions between user validations.

## Claims

1. Method for controlling contactless transactions, said contactless transactions being operated with a portable device, said portable device comprising a secure element, **characterised in that** it comprises
a. storing a predetermined number of authorised transactions
b. requesting a user's validation when a predetermined transaction's threshold is reached so that to regenerate a new number of authorised transactions.

2. Method according to claim 1, **characterised in that** it comprises capturing and storing a biometric data of the user in the secure element.

3. Method according to claim 2, **characterised in that** it comprises using a voice data of the user as biometric data.

4. Method according to any of the previous claim, **characterised in that** it comprises using a SIM card as secure element.

5. Method according to any of the claims 1 to 3, **characterised in that** it comprises using a micro SD card as secure element.
